Europäisches Patentamt

(19) European Patent Office

Office européen des brevets

(11) Publication number: **0 168 671**
**B1**

(12) **EUROPEAN PATENT SPECIFICATION**

(45) Date of publication of patent specification: 24.05.89

(21) Application number: 85107669.5

(22) Date of filing: 21.06.85

(51) Int. Cl.⁴: **G 21 C 7/26**

(54) **Fluid moderator control system fuel assembly seal connector.**

(30) Priority: 02.07.84 US 626942

(43) Date of publication of application:
22.01.86 Bulletin 86/04

(45) Publication of the grant of the patent:
24.05.89 Bulletin 89/21

(84) Designated Contracting States:
BE CH FR GB IT LI

(56) References cited:
EP-A-0 054 238
US-A-2 977 297
US-A-3 103 475
US-A-3 578 563
US-A-3 725 199

(73) Proprietor: **WESTINGHOUSE ELECTRIC CORPORATION**
**Westinghouse Building Gateway Center**
**Pittsburgh Pennsylvania 15222 (US)**

(72) Inventor: **Veronesi, Luciano**
**102 Glenn David Drive**
**Pittsburgh Pennsylvania (US)**
Inventor: **Tower, Stephen Nelson**
**P.O. Box 414 Culp Road**
**Murrysville Pennsylvania (US)**
Inventor: **Klassen, William Edward**
**2387 Tillbrook Drive**
**Monroeville Pennsylvania (US)**

(74) Representative: **Casalonga, Axel et al**
**BUREAU D.A. CASALONGA OFFICE JOSSE & PETIT Morassistrasse 8**
**D-8000 München 5 (DE)**

Courier Press, Leamington Spa, England.

## Description

This invention relates in general to the field of spectral shift pressurized water nuclear reactors and in particular to apparatus for seal connecting between fuel assemblies and the means used to provide the spectral shift control.

In conventional, state of the art, pressurized light water nuclear reactors, the reactor core is designed to contain excess reactivity. As the reactor operates, the excess reactivity is gradually consumed until such point as the reactor core will no longer sustain the nuclear reaction and then the reactor must be refueled. Usually this occurs over a period of years. It is very advantageous to maximize the time between reactor refuelings (extend the life of the core) since refueling requires complete shutdown of the reactor and is quite time consuming. Extending the life of the core is usually accomplished by providing the core with a significant amount of excess reactivity.

Typically, control over the fission process, or reactivity control, including control necessitated by the excess reactivity is accomplished by varying the amounts of neutron-absorbing materials within the core of the reactor. Control rods which contain neutron-absorbing materials and are movable into and out of the core provide one method of controlling the reactivity. Burnable and nonburnable poisons dissolved in the reactor coolant provide another method of reactivity control. As the reactivity decreases, due to reactor operation, the poisons are gradually removed by being burned by reactor operation or are physically removed by a separate system designed for such purpose. Most often, a combination of dissolved poisons and control rods are used to control the reactor and the excess reactivity.

Unfortunately, control with control rods and poisons, absorb neutrons which could otherwise be used in a productive manner. For example, the neutrons produced by the excess reactivity could be used to convert fertile materials within the fuel assemblies to plutonium or fissile uranium which can then be fissioned and contribute to an even further extension of core life. Thus, while the use of control rods and dissolved poisons provide very effective reactor control, their use comprises a relatively inefficient depletion of high cost uranium. It would be therefore, advantageous to control the excess reactivity, but not suppress the neutrons associated with the excess reactivity, in order to further extend core life or time between refuelings, and to lower fuel costs.

It is known that fuel element enrichment can be reduced and the conversion ratio of producing fissile materials can be increased by employing a "hardened" (nuclear energy) spectrum during the first part of the fuel cycle to reduce excessive reactivity and to increase the conversion of fertile material to fissile material; then employing a "softer" (lower energy) neutron spectrum during the latter part of the fuel cycle to increase reactivity and extend the core life by fissioning the previously generated fissile material. One such method utilizing the above is known as spectral shift control which provides a reactor with an extended core life while reducing the amount of neutron absorbing material in the reactor core. One example of such method of control comprises a mechanical spectral shift reactor whereby hollow displacer rods are provided within fuel assemblies within the core (which, of course, displace) an equal volume of water within the fuel assemblies) and which are mechanically withdrawn or punctured to accomplish water flooding of the available volume (EP—A—0 054 238). In the early stages of core life, the neutron spectrum is hardened by the displacement of a portion of the water within the core by the displacer rods. The spectrum is later softened by the addition of water within the core by the aforesaid rod withdrawal or puncturing.

For achieving a spectral shift heavy water or deuterium oxide may be utilized to replace an equivalent volume of core water during the early stages of core life then to gradually reduce the volume of heavy water and replace it with regular reactor coolant (light water) during the later stages of core life. The less effective moderator, heavy water, allows for less fuel enrichment and a higher ratio of converting fertile material to fissile material which in combination provides for a reduction of fuel costs and an extension of core life. There is however a seal connector between the fuel element assembly and the lower core support plate which allows for the introduction of the heavy water replacing the light water moderator and the subsequent reintroduction of the moderator while effectuating a sealed connection between the fuel assemblies and the core support plate. Such seal connectors must provide for sealing to guard against sudden increases in reactivity and for a nonfixed or nonpermanent sealed connection because of the inaccessibility of the bottom of the fuel assembly during core fueling.

Accordingly, it is the principal object of the present invention to provide a spectral shift reactor with a seal connector which minimizes the possibility of leakage into the connector so as to prevent an inadvertent increase in reactivity and especially a seal connector which is integral with the fuel assembly and allows for automatic connection upon positioning of the fuel assembly within the reactor core.

With this object in view, the present invention resides in a spectral shift pressurized water nuclear reactor having one or more flow channels in a fuel assembly and one or more flow channels in a lower core support plate characterized in that a seal connector consisting of elongated members axially aligned having a flow channel therethrough is disposed between said fuel assembly and said core support plate, said elongated members having first and second tubular end portions which are spaced and sealingly interconnected by a bellows and having opposite ends for sealing engagement with said fuel assembly and said core support plate.

The invention will become more readily apparent from the following description of a preferred embodiment thereof shown, by way of example only, in the accompanying drawings, in which:

Figure 1 is a cross-sectional view of a portion of a core of a pressurized water nuclear reactor employing a fluid moderator control system illustrating a general use of a seal connector;

Figure 2 is a detail view in cross section of one embodiment of a seal connector made in accordance with the invention herein; and,

Figure 3 is a detail view in cross section of another embodiment of a seal connector made in accordance with the invention herein.

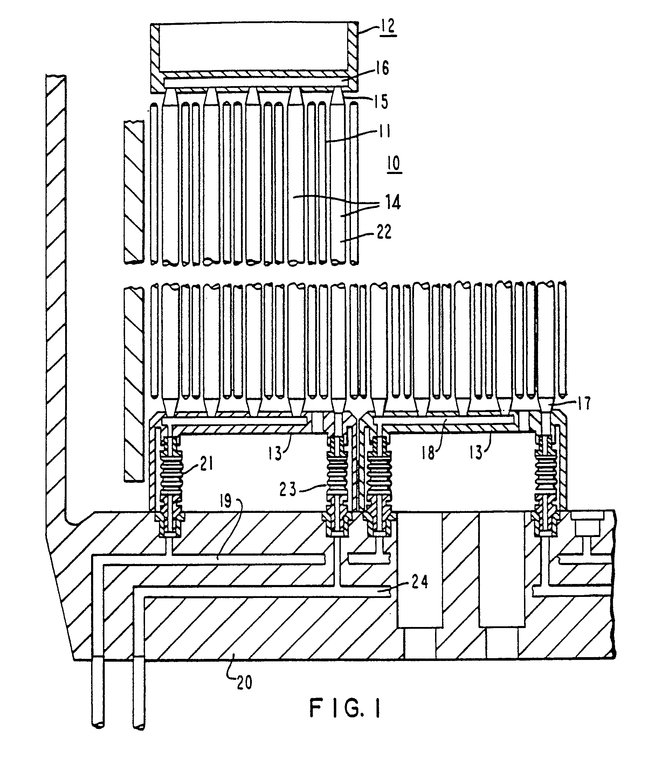

Referring now to Figure 1 of the drawings, there is depicted therein a portion of the core and the reactor lower internals. A fuel assembly generally designated by the numeral 10 includes a plurality of fuel rods 11, an upper outlet flow nozzle 12, and a lower inlet flow nozzle 13. Fuel rods 11 are parallel arranged and may be held in spaced relationship to each other by Inconel grids (not shown) as is well known in the art. A plurality of moderator control tubes 14 are interspersed among fuel rods 11. The Inconel grids (not shown) also support and are attached to the moderator control tubes 14. Upper outlet flow nozzle 12 is fixedly attached to the upper end 15 of the moderator control tubes 14 as by welding. A manifold 16, within upper outlet nozzle 12, flow connects the upper ends 15 of moderator control tubes 14. Similarly, the lower inlet flow nozzle 13 is seal welded to the lower end 17 of the moderator flow tubes 14. A lower manifold 18 flow connects the lower end 17 of all but one of the moderator flow tubes 14.

Fuel assembly 10, as described, is of a type used with a light water, pressurized nuclear reactor which utilizes the spectral shift concept by varying the amount of deuterium oxide or heavy water within the fuel assembly, thereby varying the amount of light water moderator within the core. The deuterium oxide enters the fuel assembly via the channels 19 in the lower core support plate 20, through inlet seal connector 21, to lower nozzle manifold 18. The deuterium oxide is then distributed to the moderator control tubes 14 which, upon rising to the upper nozzle manifold 16, displaces the light water therein. The deuterium oxide then flows down the return flow moderator tube 22 to outlet seal connector 23 to the outlet channel 24 in the lower core support plate 20.

It is to be noted, however, that once the desired amount of deuterium oxide is achieved within the moderator control tubes 14 and 22, the flow of deuterium oxide is reduced to the extent necessary to provide for any makeup heavy water required as a result of internal leakage and more importantly to provide a controlled continuous flow to remove radiation energy and to maintain the temperature of the heavy water below the boiling point. Hence, each seal connector 21 and 23 experiences the substantially same internal pressure. Moreover, since each seal connector 21 and 23 are located at the same axial core station, they each experience the same external pressure. Therefore, the inlet seal connector 21 is exposed to virtually the same environment as the outlet seal connector 23, and, by adjusting the internal pressure of the deuterium oxide to that of the coolant moderator at the inlet to the fuel assembly 10, there is substantially no pressure differential between the internal portion and the external portion of the seal connectors 21 and 23. Because of the substantially similar operating environment of the seal connectors 21 and 23, each seal connector may be made precisely the same and can be interchangeable.

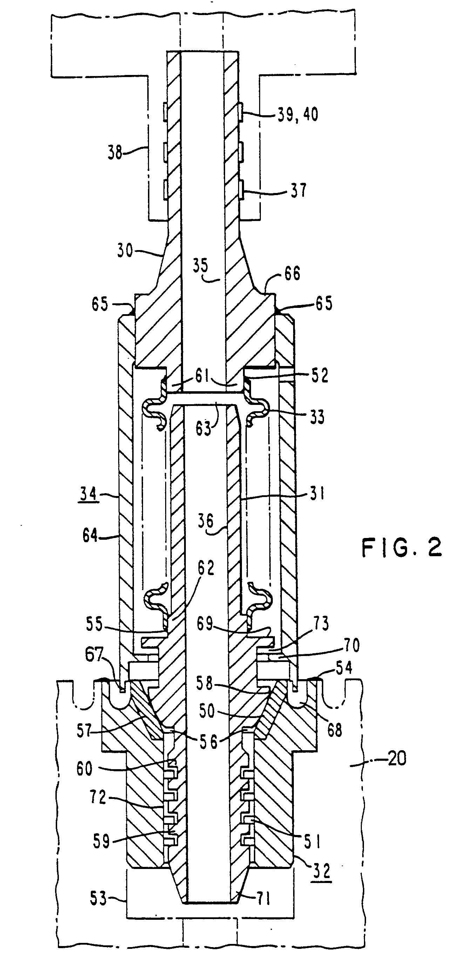

Details of seal connector 21 or 23 are shown in Figure 2. Notwithstanding the near zero pressure differential internal and external of the seal connector, they are made to be leak free in the unlikely event of the existence of a negative or a positive pressure differential. A positive pressure differential coupled with a leaking seal connector could result in an inadvertent increase in moderation by an unplanned reintroduction of moderator within the fuel assembly 10. Obviously, such a condition is undesirable. On the other hand, a negative pressure differential coupled with a leaking seal connector could result in an unplanned decrease in moderator which is also undesirable.

Seal connector 21 or 23 in general and represented with reference sign 34 in Figure 2 comprises a static upper portion 30 which is connected to the inlet end of fuel assembly 10, a movable lower portion 31 which is inserted within an insert 32, in the lower core support plate 20, a bellows 33 connecting the upper 30 and lower 31 portions and a skirt connected to upper portion 30 and which encircles bellows 33. Flow channels 35 and 36 are provided within upper portion 30 and lower portion 31, respectively, for purposes of introducing deuterium oxide or any other fluid (liquid or gas) which is less effective in slowing down neutons than light water into the fuel assembly 10 or reintroducing the light water reactor coolant into said fuel assembly 10.

Since the bottom or the moderator inlet end of fuel assembly 10 is inaccessible during the initial placement of fuel assemblies within the core, during fuel shuffling operations or during core refueling, a fixed or permanent mechanical connection between fuel assembly 10 and the lower core support plate 20 is not practical. Hence, seal connector 21 or 23 may be integral with or permanently affixed only at one end to either the lower nozzle 13 or the core support plate 20. In the embodiment illustrated in Figure 2, the static upper portion 30 of seal connector 21 or 23 is integral with flow nozzle 13 while the movable lower portion 31 comprises a slip fit which is spring loaded within and against core support plate 20 by a combination of fuel assembly hold down spring forces, the weight of the fuel assembly and a bellows spring force to be described hereinafter. The sealed fit between lower portion 31 and core support plate 20 is effectuated upon placement of fuel assembly 10 within the reactor core and is disconnected upon removal of fuel assembly 10. It is to be noted that an integral connection at the lower core support plate 20 with a slip fit at the flow nozzle 13 would be equally satisfactory and such alternative is intended to be included within the scope of the invention described herein.

Still referring to Figure 2, upper static portion 30 may be connected by a rolled bulge joint 37 within a boss or cylindrical extension 38 which is an integral part of lower nozzle 13. A plurality of rolled bulge joints 37 are provided so that a substantially leak free joint obtained between upper portion 30 and boss 38. In this type of joint, the thin cylindrical portion 39 of static portion 30 is rolled into grooves 40 in the internal surface of boss 38. Another equally satisfactory and adequate mechanical connection may comprise a "Swage-lok" or other similar type of tube to housing connection. Still another type of seal joint may comprise threading upper portion 30 into boss 38 and seal welding around the periphery thereof provided the materials used are capable of being welded.

One method to effectuate the seal between the movable portion 31 of seal connector 21 or 23 and the lower core support plate 20 comprises a ball and cone seal 50 in combination with a plurality of "piston ring" seals 51. In this regard, insert 32 is inserted within an opening 53 in core support plate 20 and is welded at 54 thereto. Weld 54 serves as a mechanical and a sealing joint, with the latter being necessitated because of the need for opening 53 to be flow connected to either flow channel 19 or 24 in core support plate 20, which in turn provides flow communication between the flow channels 35 and 36 in seal connector 21 or 23.

Ball and cone seal 50 employs principles which are well known in the art. A truncated conical surface 56 is provided at the upper end of insert 32. Surface 56 may be directly machined in insert 32 or may comprise a conical insert 57 made of a material substantially harder than the material from which lower portion 31 of seal connector 21 or 23 is made which is welded to lower portion 31 and then machined to final dimensions. While being slightly more complicated, the conical insert 57 is preferable in that it negates the probability of damage to the insert 32 integral with the lower core support plate 20.

Movable portion 31 of the seal connector 21 or 23 includes a machined truncated spherical surface 58 which sealingly mates with conical surface 56. A plunger 59 extends from movable portion 31 and has a plurality of piston ring seals 51 fitted to grooves 60 machined in the periphery thereof. Ring seals 51 are of any design which is well known in the art and serve as a backup seal to limit any leakage into or out from the moderator control tubes 14 in the event that the main ball and cone seal 50 is damaged or otherwise fails to operate properly.

A bellows 33 sealingly connects lower portion 31 to upper portion 30 of seal connector 21 or 23. Bellows 33 is made of metal and is welded at 52 and 55 to a cylindrical extension 61 from upper portion 30 and a cylindrical extension 62 from lower portion 31. Clearance space 63 is provided between upper 30 and lower 31 portions of the seal connector. Clearance space 63 allows for relative axial motion between the upper 30 and lower portions 31 which motion allows for a compressive load to be applied to fuel assembly 10 when installed in the reactor core and assures positive sealing of spherical surface 58 within conical surface 56. As illustrated, bellows 33 comprises a spring which transmits its compressive force, the compressive spring force applied to fuel assembly 10 and the weight of the fuel assembly to the lower portion 31 of seal connector 21 or 23. Metallic bellows 33 and clearance space 63 also allows for proper sealing notwithstanding any slight misalignment perpendicular to the axial centerline of the seal connector 21 or 23.

Skirt provides protection for bellows 33 and serves as an additional stop to limit the compressive travel of the movable lower portion 31 relative to the upper portion 30. Skirt comprises a cylindrical tube 64 welded at 65 to an enlarged cylindrical portion 66 of the static upper portion 30. Skirt extends down from said weld 65 covering the bellows 33 and terminates at end 67 which is spaced from insert 52 by a predetermined amount 68. Corresponding overlapping flanges or tabs 69 and 70 on movable portion 31 and skirt, respectively, limit the extension of space 63 when seal connector 21 or 23 is not fitted between nozzle 13 and core support plate 20.

As described, seal connector 21 or 23 comprises a mechanically connected extension of a fuel assembly 10. Insert 32 is fixedly connected to core support plate 20. In the event seal connector 21 or 23 is damaged, it may be removed from fuel assembly 10 and replaced with a new seal connector. During such replacement, fuel assembly 10 is of course not assembled within a reactor core.

When assembling a fuel assembly 10 equipped with seal connectors 21 and 23, normal procedures and precautions are utilized. Guide pins (not shown) as are commonly known in the art are used to guide the installation of fuel assembly 10 in its attachment to the core support plate 20. In this manner, the fuel assembly is properly aligned prior to any fit up between the seal connectors 21 and 23 and insert 32 so as to assure that the seal connectors 21 and 23 are not damaged during the installation procedure. Plunger 59 is further provided with a tapered entrance end 71 in the unlikely event of any misalignment of the fuel assembly 10 relative to core support plate 20. Taper 71 even further provides for minor misalignment, if any, of plunger 59 relative to opening 72 within insert 32. The transverse motion permitted by bellows 33, as previously described, then assures full sealing along the length of plunger 59. Contact between spherical surface 58 and conical surface 56 is effectuated after plunger 59 is substantially fully fitted within opening 72.

Since bellows 33 exerts an extending force between upper 30 and lower 31 portions of the seal connectors 21 and 23, where contact is first made between the spherical 58 and conical 56 sealing surfaces, space 63 is greater than that shown in Figure 2 by an amount approximately equal to the space 73 between flanges or tabs 69 and 70. The spring force on the exit end of fuel assembly 10 (not shown) as is commonly used in pressurized water nuclear reactors plus the weight of fuel assembly 10 serves to compress bellows 33 which then loads the spherical 58 and conical 56 surfaces. Upon completion of installation and the initiation of reactor operation, flow channels in the core support plate 20 are in flow communication with the aligned flow channels 35 and 36 in seal connectors 21 and 23 which permit flow into and out of the moderator control tubes 14 and 15.

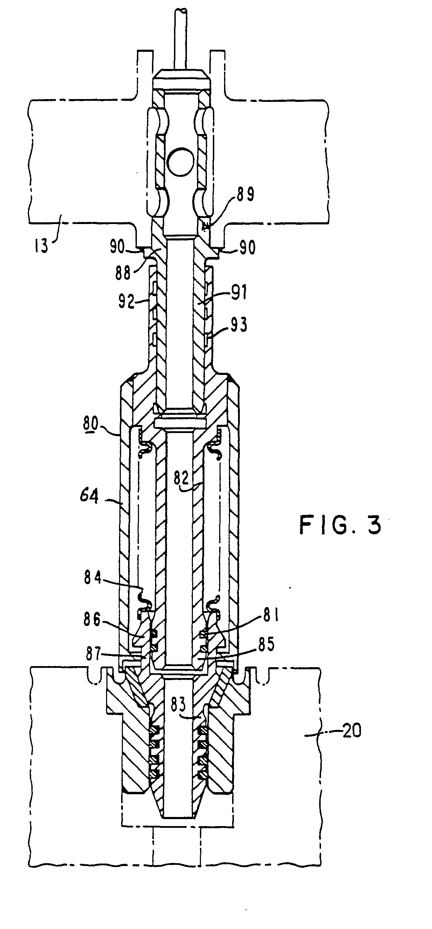

Another embodiment of a seal connector 80 is shown in Figure 3. In general, this embodiment differs from that of Figure 2 by the provision of one or more ring seals 81 between the static portion 82 and the movable portion 83 of the seal connector 80. Ring seals 81 provide a backup seal in the unlikely event of failure of bellows 84. Ring seals 81 are fitted to grooves within end 85 of static portion 82; end 85 fits within an extension 86 of movable portion 83 which has an opening 87 therein and overlaps end 85.

Further illustrated in Figure 3 is an alternate method of attaching the static portion 82 to the lower nozzle 13. A flow connector 88 is inserted within an opening 89 in the lower nozzle 13. Opening 89 is in flow communication with either the lower nozzle manifold 18 and moderator control tube 22 (Figure 1) depending upon whether seal connector 80 comprises an inlet connector or an outlet connector, respectively. Flow connector 88 is welded at 90 to lower nozzle 13. An extension 91 of the flow connector 88 fits within the upper end 92 of the static portion 82 of seal connector 80. As shown, static portion 82 is integrally seal connected to flow connector 88 by a plurality of rolled joints 93. As previously discussed, such connection may also comprise a "Swage-lok" type of connection.

While the invention has been described, disclosed, illustrated and shown in certain terms of certain embodiments or modifications which it has assumed in practice, the scope of the invention is not intended to be nor should it be deemed to be limited thereby and such other modifications or embodiments as may be suggested by the teachings herein are particularly reserved especially as they fall within the breadth of the claims here appended.

## Claims

1. Spectral shift pressurized water nuclear reactor having one or more flow channels in a fuel assembly (10) and one or more flow channels in a lower core support plate (20) characterized in that a seal connector (21, 23; 34; 80) consisting of elongated members (30; 31; 82, 88) axially aligned having a flow channel therethrough is disposed between said fuel assembly and said core support plate, said elongated members having first and second tubular end portions (61, 63) which are spaced and sealingly interconnected by a bellows (33, 84) and having opposite ends for sealing engagement with said fuel assembly (10) and said core support plate (20).

2. A reactor according to claim 1, characterized in that said elongated member (30; 88) is connected to said flow channel (18) in said fuel assembly (10) by a permanently affixed mechanical joint.

3. A reactor according to claim 2, characterized in that said elongated member (31; 82) is connected to said one or more flow channels in said core support plate (20) by a ball and cone connection.

4. A reactor according to claim 3, characterized in that said ball and cone connection comprises a truncated spherical surface (58) on said elongated member (31) and a truncated conical surface (56) on said core support plate (20).

5. A reactor according to claim 4, including an insert (32) fixedly connected to said core support plate (20), said insert having said truncated conical surface (56) thereon.

6. A reactor according to claim 5, characterized in that said truncated conical surface (56) is located on a truncated conical member (57) fixedly connected to said insert (32) with said surface (56) of said truncated conical member being harder than that of said truncated spherical surface.

7. A reactor according to claim 6, characterized in that said bellows (33; 84) comprises spring means for loading said ball and cone connection.

8. A reactor according to any of claims 1 to 7, characterized in that a tubular cover (64) is disposed around said bellows for the protection of said bellows (33; 84).

## Patentansprüche

1. Druckwasserkernreaktor, der zur Spektralverschiebung eingerichtet ist, mit einem oder mehreren Strömungskanälen in einer Brennstoffeinheit (10) und einem oder mehreren Strömungskanälen in einer unteren Kernabstützplatte (20), dadurch gekennzeichnet, daß ein Abdichtverbindungsteil (21, 23; 34, 80) bestehend aus axial ausgerichteten langgestreckten Gliedern (30, 31; 82, 88) mit durchgehendem Strömungskanal zwischen der Brennstoffeinheit und der Kernabstützplatte angeordnet ist, wobei die langgestreckten Glieder erste und zweite rohrförmige Endteile (61, 63) aufweisen, die im Abstand voneinander von einem Balg (33, 84) abgedichtet miteinander verbunden sind und entgegengesetzte Enden zum dichtigkeitshaltenden Eingriff mit dem Brennstoffelement (10) und der Kernabstützplatte (20) aufweisen.

2. Reaktor nach Anspruch 1, dadurch gekennzeichnet, daß das langgestreckte Glied (30; 88) von einer unlösbar befestigten mechanischen Verbindung mit dem Strömungskanal (18) in der Brennstoffeinheit (10) verbunden ist.

3. Reaktor nach Anspruch 2, dadurch gekennzeichnet, daß das langgestreckte Glied (31; 82) von einer Kugel-Kegelverbindung mit dem einen oder den mehreren Strömungskanälen in der Kernabstützplatte (20) verbunden ist.

4. Reaktor nach Anspruch 3, dadurch gekennzeichnet, daß die Kugel-Kegelverbindung eine an dem langgestreckten Glied (31) befindliche Stumpfkugelfläche (58) und eine an der Kernabstützplatte (20) befindliche Stumpfkelgelfläche (56) aufweist.

5. Reaktor nach Anspruch 4, der einen mit der Kernabstützplatte (20) fest verbundenen Einsatz (32) umfaßt, an dem sich die Stumpfkegelfläche (56) befindet.

6. Reaktor nach Anspruch 5, dadurch gekennzeichnet, daß sich die Stumpfkegelfläche (56) an einem Stumpfkegelglied (57) befindet, das mit dem Einsatz (32) fest verbunden ist, wobei die Fläche (56) des Stumpfkegelgliedes härter als diejenige der Stumpfkugelfläche ist.

7. Reaktor nach Anspruch 6, dadurch gekennzeichnet, daß der Balg (33; 84) eine Federeinrichtung zum Belasten der Kugel-Kegelverbindung umfaßt.

8. Reaktor nach einem der Ansprüche 1 bis 7, dadurch gekennzeichnet, daß zum Schutz des Balges (33; 84) eine rohrförmige Abdeckung (64) um den Balg herum angeordnet ist.

## Revendications

1. Réacteur nucléaire à eau sous pression et à déplacement spectral comportant un ou plusieurs canaux d'écoulement dans un assemblage combustible (10) et un ou plusieurs canaux d'écoulement dans une plaque inférieure (20) de support de coeur, caractérisé en ce qu'un raccord étanche (21, 23; 34; 80) consistant en des éléments allongés (30, 31; 82, 88) alignés axialement et comportant un canal d'écoulement traversant est disposé entre ledit assemblage combustible et ladite plaque de support de coeur, lesdits éléments allongés comportant des première et seconde parties d'extrémité (61, 63) qui sont espacées et reliées mutuellement de façon étanche par un soufflet (33; 84) et comportant des extrémités opposées destinées à venir en contact d'étanchéité avec ledit assemblage combustible (10) et ladite plaque (20) de support de coeur.

2. Réacteur selon la revendication 1, caractérisé en ce que ledit élément allongé (30; 88) est raccordé audit canal d'écoulement (18) dudit assemblage combustible (10) par un joint mécanique fixé de façon permanente.

3. Réacteur selon la revendication 2, caractérisé en ce que ledit élément allongé (31; 82) est raccordé au(x) dit(s) canaux d'écoulement de ladite plaque (20) de support de coeur par un liaison à sphère et cône.

4. Réacteur selon la revendication 3, caractérisé en ce que ladite liaison à sphère et cône comprend une surface sphérique tronquée (58) sur ledit élément allongé (31) et une surface conique tronquée (56) sur ladite plaque (20) de support de coeur.

5. Réacteur selon la revendication 4, comprenant une pièce rapportée (32) reliée de façon fixe à ladite plaque (20) de support de coeur, ladite pièce rapportée comportant ladite surface conique tronquée (56).

6. Réacteur selon la revendication 5, caractérisé en ce que ladite surface conique tronquée (56) se trouve sur un élément conique tronqué (57) relié de façon fixé à ladite pièce rapportée (32), ladite surface (56) de l'élément conique tronqué étant plus dure que celle de la surface sphérique tronquée.

7. Réacteur selon la revendication 6, caractérisé en ce que le soufflet (33; 84) comprend un moyen élastique pour soumettre à une charge ladite liaison à sphère et cône.

8. Réacteur selon l'une quelconque des revendications 1 à 7, caractérisé en ce qu'une enveloppe tubulaire (64) est disposée autour du soufflet pour la protection de ce soufflet (33; 84).

FIG. I

FIG. 2

2

FIG. 3